(19) **Europäisches Patentamt / European Patent Office / Office européen des brevets**

(11) **EP 3 910 548 B1**

(12) **EUROPEAN PATENT SPECIFICATION**

(45) Date of publication and mention of the grant of the patent:
**18.03.2026 Bulletin 2026/12**

(51) International Patent Classification (IPC):
**G06V 10/24** (2022.01)      **G06V 10/50** (2022.01)
**G06V 10/10** (2022.01)      **G06V 10/88** (2022.01)
**G07D 7/00** (2016.01)      **B42D 25/328** (2014.01)
**G07D 7/20** (2016.01)

(21) Application number: **20472005.6**

(22) Date of filing: **14.05.2020**

(52) Cooperative Patent Classification (CPC):
**G07D 7/0032; B42D 25/328; G06V 10/17;**
**G06V 10/245; G06V 10/507; G06V 10/88;**
**G07D 7/003; G07D 7/2008; G07D 7/206**

(54) **METHOD FOR CHECKING VARIABLE DIFFRACTIVE OPTICAL ELEMENT**

VERFAHREN ZUR ÜBERPRÜFUNG EINES VARIABLEN DIFFRAKTIVEN OPTISCHEN ELEMENTS

PROCÉDÉ POUR VÉRIFIER UN ÉLÉMENT OPTIQUE DIFFRACTIF VARIABLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**17.11.2021 Bulletin 2021/46**

(73) Proprietor: **Demax - Holograms AD**
**1138 Sofia (BG)**

(72) Inventors:
- **Monovski, Valentin Konstantinov**
  **1799 Sofia (BG)**
- **Laskov, Evgenii Atanassov**
  **1517 Sofia (BG)**
- **Ivanovskii, Andrii**
  **1797 Sofia (BG)**
- **Baldjiev, Anguel Georgiev**
  **6500 Svilengrad (BG)**

- **Tonchev, Dimitar Antonov**
  **1574 Sofia (BG)**
- **Dinova, Margita Todorova**
  **1632 Sofia (BG)**
- **Dobrev, Mario Roumenov**
  **1164 Sofia (BG)**
- **Akuzov, Danail Trendafilov**
  **1582 Sofia (BG)**
- **Pogan, Ignat**
  **1407 Sofia (BG)**
- **Stoilov, Georgi Ivanov**
  **1220 Sofia (BG)**

(74) Representative: **Steffan & Kiehne Patentanwälte PartG mbB**
**Burgplatz 21-22**
**40213 Düsseldorf (DE)**

(56) References cited:
CN-A- 108 647 659      US-A1- 2010 314 861
US-A1- 2016 378 061

## Description

### FIELD OF THE INVENTION

The present invention relates to the method of verification of diffractive optical variable identification device (DOVID), used for the protection of documents and goods from forgery. DOVID is a relief type and is embossed on polymer metalized foil where the foil is applied on paper document. The verification is processed using a smartphone using special software.

### PRIOR ART

The wide variety of optical effects used in modern DOVID is confusing to ordinary people who can only perform visual inspection. Therefore, for example, when introducing optical security for banknotes, an educational program is conducted to teach users to identify DOVID. Identification is sometimes not easy even for those skilled in the art. The subjectivity of such visual inspection often results in the wrong negative conclusions for original DOVID or false positive for faked one.

The use of such a diffractive optical variable device requires definitions of some basic terms, such as "spectral color" - a color with a dominant wavelength of the visible light range. "Non-spectral color" means a color obtained from the mixing of two or more spectral colors, resulting in an unsaturated color, such as brown, purple, purple, etc. Another term is "white light illumination" - the illumination of the variable optical device with natural directional non-polarized light. The term "observation conditions" is also used - a set of azimuth and height angles of illumination and observation of an element. The term "substantially different observation conditions" means two observation conditions that differ in azimuth and/or height angles of at least 20 degrees, and preferably more than 30 degrees. "Dynamic effect" means that a DOVID contains a set of single images (angles) that are visible individually under certain observation conditions and differ in one or more of their geometric characteristics: orientation, position, or size. Another term is "hidden information" - information that is not visually observable to the naked eye and requires a special procedure for visualization or reading.

There is a known method [US2014055824A1] for automatic machine authentication of documents containing DOVID, which involves picturing of a given document at two different angles of illumination, calculating two digital fingerprints of images and comparing them with ones obtained from the original DOVID. If the difference between the fingerprints does not exceed a predetermined threshold, then the DOVID is considered original.

The method cannot be used for real-time verification because it requires the calculation of digital fingerprints from the original and from all captured images, which complicates the verification procedure. Another disadvantage is that the inspection pictures have to be taken under the same observation conditions under which the pictures of original DOVID photographs were taken. This makes it difficult to use the method because the verification device is positioned by hand.

US 2010/314861 A1 discloses security devices using parallax moiré effects from two correlated random layers (base and revealing) separated by a gap. Tilting produces dynamic visual patterns (scrolling, rotation, scaling) for authentication. Built-in encryption arises from correlated random sequences, making counterfeiting difficult. Applications include banknotes, IDs, packaging, and valuables.

### OBJECT AND BRIEF DESCRIPTION OF THE INVENTION

The object of the present invention is to enhance the security properties of DOVID by improving the check-up procedure with automatic, machine identification, and verification in addition to visual subjective control.

The problem is solved by using a method of verifying the diffractive optical variable element as described in the appended claims.

According to one variant of the method, the binary image with a random texture is a Fourier hologram and stores a hidden image with a random phase mask. The straightened image is processed with a reverse Fourier transform and its amplitude part containing a decoded image is displayed on the smartphone's screen.

According to another variant of the method, the binary image with a random texture contains an encrypted with a digital key image. The straightened image is decrypted with the key and the original image is displayed on the smartphone's screen.

The DOVID verification algorithm has four main stages:

- Establishing the fact that the DOVID with the original dynamic effect is being verified and not, for example, a polygraphic image or a DOVID with another dynamic image;

  - Correction of geometric deformations in the captured images;
  - Recognition and analysis of non-spectral colors with pre-defined properties that confirm authenticity;

- The decryption of hidden information.

Successfully passing through all four stages leads to a conclusion about the DOVID's authenticity. The advantages of the method according to the invention are:

- Quick real-time verification;
- Identification of specific features, which ensures high reliability of the verification;
- A multi-step feature check, which involves comparing the geometric design of the DOVID with that of the original, recognizing dynamic effect and checking its parameters, measuring the color characteristics of the pictures taken under substantially different observation conditions and comparing them with predefined values, decoding, and rendering of hidden information.

**BRIEF DESCRIPTION OF THE DRAWINGS**

The invention is explained with the accompanying drawings, where

Figure 1 - DOVID with machine-readable features;
Figure 2 - Finding the rotation angle of the object of dynamic effect;
Figure 3 - Correction the rotation and scaling distortion of the taken picture by the high-pass filtering (HPF) and Fourier transformation (FFT);
Figure 4 - Correction the perspective distortions of the taken picture;
Figure 5 - Color histograms of two pictures taken at substantially different observation conditions;
Figure 6 - Decoding of a hidden Fourier hologram image;
Figure 7 - Decoding of a hidden image from a key encrypted image.

**DETAILED DESCRIPTION OF PARTICULAR EMBODIMENTS OF THE INVENTION**

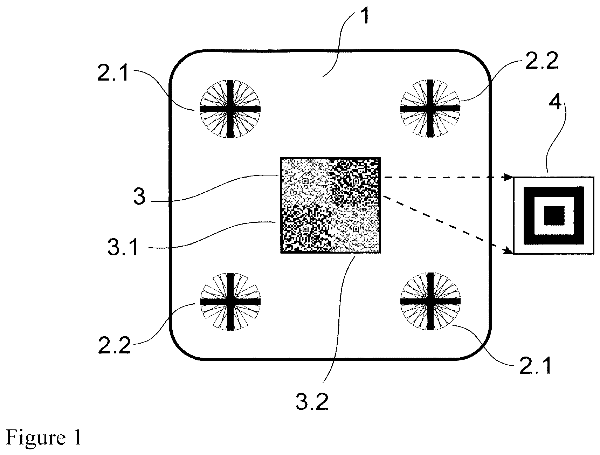

The method was developed for checking DOVID (1), which contains a set of machine-readable features (Figure 1):

- Dynamic effect image (2.1, 2.2);
- Images with non-spectral colors (3.1, 3.2);
- Binary random-texture image with hidden information (3);
- Additional marks (4) for the correction of geometric deformations.

In FIG. 1 the observation scheme of a diffraction grating is shown. The light diffracts at an altitude angle $\theta$ read between normal to the plane of the grating and a diffracted beam and an azimuth angle $\Phi$ read between the perpendicular to the grating's grooves and the beam's projection to the grating. The azimuth angle is positive if is read clockwise and negative against.

The present invention describes a method for recognizing and verifying the authenticity of machine-readable features of DOVID (1). Verification is performed using a smartphone that continuously captures DOVID (1) in real-time. From these pictures, the machine-readable features are identified and their parameters are measured. If the parameters are within preset ranges, it is concluded that DOVID (1) is original. Otherwise, the DOVID is falsified.

**Dynamic effect recognition**

At the first stage, DOVID (1) is recognized while at least two pictures are taken at substantially different observation conditions. When comparing pictures are sought design elements that show dynamic effects: moving, changing orientation, shape, or size. If the dynamic effects are not detected, then the pictured device is not DOVID and the algorithm stops the verification with an indication of a failed attempt on the screen.

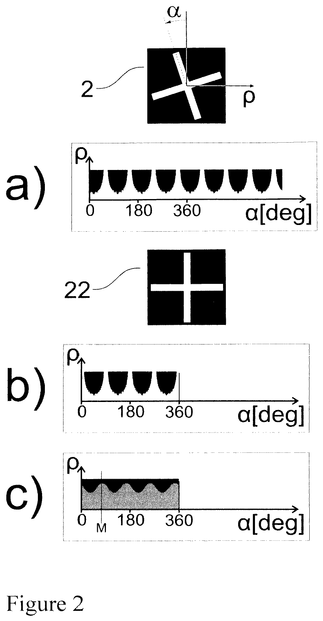

The recognition of a dynamic effect in DOVID (1) is based on the correlation comparison algorithm. It is explained below with an example of finding the angle of rotation of the object (Figure 2). In the general case, it can be applied to other geometric transformations: scaling, moving, and combinations of them.

We consider a dynamic image comprising the crosses (2), which change their orientation (rotate) when the smartphone is translating above the DOVID (1), and monitoring of the repeating angles.

Finding the angle of rotation is performed using a modified Fourier transform for polar coordinates. The image of the cross is binarized and converted from a polar coordinate system to a Cartesian coordinate system by placing $x = \alpha$ and $y = \rho$ (Figure 2a). An "unfolded" image of the cross is obtained. To perform a complete analysis of the angle of rotation, it is necessary to duplicate the unfolded image twice along the $\alpha$-axis. The same procedure is done with the probe image of the cross (22), which is oriented straight and corresponds to a zero angle of rotation (Figure 2b). It is not necessary to duplicate the "unfolded" image for original cross.

Correlation analysis is performed looking for the maximum of the correlation function between the unfolded image of the original cross while moving the unfolded image of the probe cross along the $\alpha$-axis. The maximum is obtained when the images coincide at the shifting value M along the $\alpha$ axis, which corresponds to the angle of rotation of the cross. The algorithm is performed for each cross from the picture of DOVID (1).

On the same principle, the values for scaling and position changing could be found for the image with a dynamic effect. This measuring procedure is performed for each taken picture and the differences in the geometrical parameters between the pictures are calculated.

If the differences for the pictures taken under substantially different observation conditions are greater than predefined threshold values: at least 0.1 mm for positioning, preferably more than 1 mm, at least 0.1 mm for size, preferably more than 1mm and at least 1 degree, preferably more than 10 degrees for orientation, then it is concluded that dynamic effect is original, otherwise, it might be a polygraphic image or DOVID without dynamic effect.

**Correction of geometrical deformation**

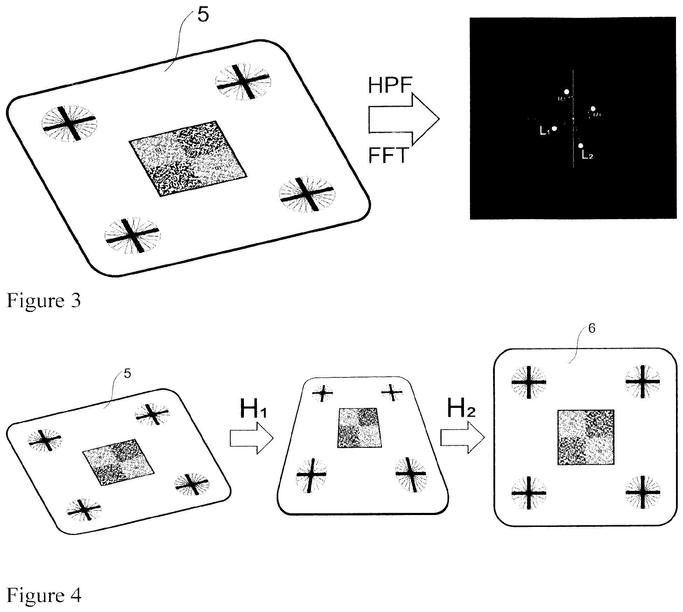

In a general case, the picture of a DOVID (1) has various geometrical deformations: translation, rotation, scaling, and perspective. For successful recognition of machine-readable features in DOVID, these deformations must be corrected (Figures 3, 4).

The taken picture (5) is filtered with a high-pass filter (HPF) and processed by Fourier transform (FFT), (Figure 3). The amplitude part of the transformation contains the four maxima corresponding to the highest spatial frequencies of the picture. For the straightened picture, the maxima should form a square with equal diagonals L1 and L2, located horizontally and vertically ($\alpha 1 = \alpha 2 = 0$). The deviations of the measured angles and the sizes of the diagonals from those for the straightened picture are used for the first transformation matrix H1 to correct rotation and scaling.

To correct the perspective, the additional square marks (4) placed on the binary random-texture image (3) shall be used. They consist of the alternating color concentric square contours with ratios 1:1:1:2:1:1:1. This ratio is optimal for accuracy and area usage of the DOVID. The three-contour structure provides a sufficiently high signal/noise ration. The exact positions of the marks (4) are defined by finding the maximum of the correlation function:

$$R(x, y) = \frac{\sum_{x',y'}\left(T(x', y').I(x + x', y + y')\right)}{\sqrt{\sum_{x',y'} T(x', y')^2 . \sum_{x',y'} I(x + x', y + y')^2}},$$

Where R is the cross-correlation function between the image intensity function T and the probe mark pattern I.

Based on the found coordinates of the marks (4), a reverse transformation matrix H2 is made to correct the perspective deformation (Figure 4). The general transformation H for correction of all deformation is defined as:

$$H = H1*H2$$

Applied to the input picture (5), a straightened image (6) suitable for the next analysis is obtained.

**Chromaticity histogram analysis**

To confirm the authenticity of the DOVID (1), an analysis of pre-defined areas (3.1 3.2) with non-spectral colors is performed. Modern smartphones capture and process pictures in 24-bit RGB format. Then they are converted from RGB to HSV format for processing. The brightness (V-component) is binarized and used as a mask for the chromaticity (Hue component). Thus, only areas with a brightness of more than 50% are utilized for the chromaticity analysis.

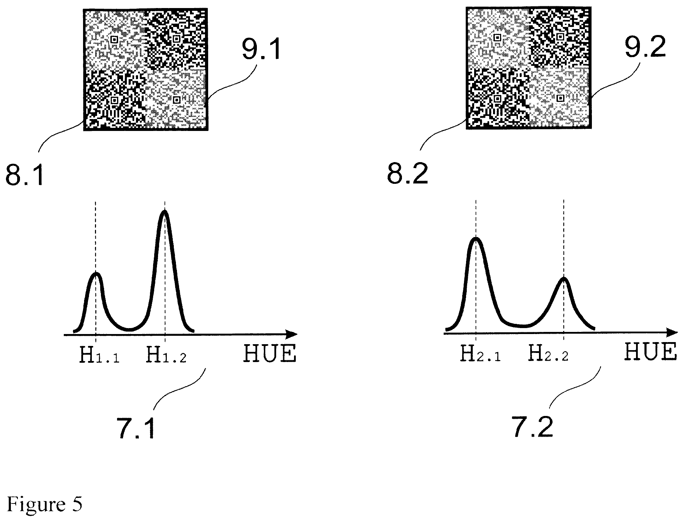

Figure 5 shows non-spectral colored areas (3.1, 3.2) pictured at the substantially different observation conditions.

Each DOVID area has at least two non-spectral colours which differ in coloration (Hue component) in at least 10 degrees

The color (8.1,8.2) is formed by similar diffraction structures in different DOVID angles. This colour is not changing and is used as a basis when comparing with other colours.

The other color (9.1,9.2) are chosen so to have at least 10 degrees, preferably more than 20 degrees difference in chromaticity for pictures taken in substantially different observation conditions. The chromaticity histograms (7.1, 7.2) are plotted for each taken picture (Figure 5). The histograms contain maxima H1.1, H1.2, and H2.1, H2.2, which are used for the comparative analysis. If these values are within a predefined range, it is concluded that the non-spectral color features (3.1, 3.2) of the DOVID (1) are original.

**Hidden information**

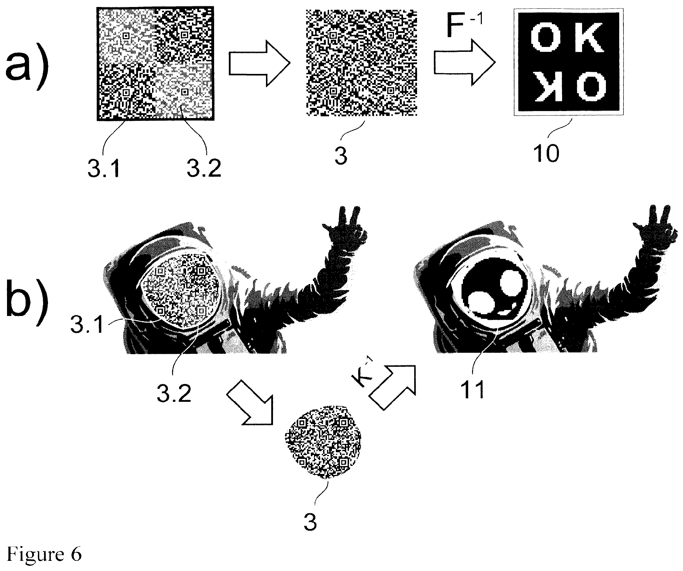

After the correction of the geometric deformations using additional marks, the DOVID image is binarized and the hidden information (3) can be decoded (Figure 6).

Usually, a Fourier hologram or an encrypted image is used for hidden information in DOVID. Other algorithms can also be used for this purpose without significant advantages.

In one embodiment of the method, the binary random-texture image (3) is a Fourier hologram (Figure 6a), and digital reconstruction with inverse Fourier transform $F^{-1}$ is used to decode the image (10) and display it on the smartphone's screen. The Fourier hologram is difficult to falsify due to the random phase mask used in the synthesis step.

In the next embodiment of the method, the binary random-texture image (3) is the image encrypted with a digital key (Figure 6b), and decryption with key $K^{-1}$ is applied. The decrypted image (11) is displayed on the smartphone's screen.

In another embodiment of the method the deciphered image 11 may contain not visual but digital information of the threshold values for dynamic effect (2.1, 2.2) and the chromaticity histograms (7.1, 7.2). In this case, the algorithm does not require predefined thresholds for original parameters but calculates with the values read from the hidden information 3

**User interface**

Due to the natural sensitivity of human vision to the horizontal movement (horizontal parallax), the detection movement is chosen to be in a horizontal direction. This is the reason why the program interface and the visualization are executed for the landscape orientation of the smartphone. Only this embodiment is considered below, however, in the general case, the use of the vertical movement of the smartphone and the vertical dynamics in DOVID (1) are also possible, as well as a combination of these variants.

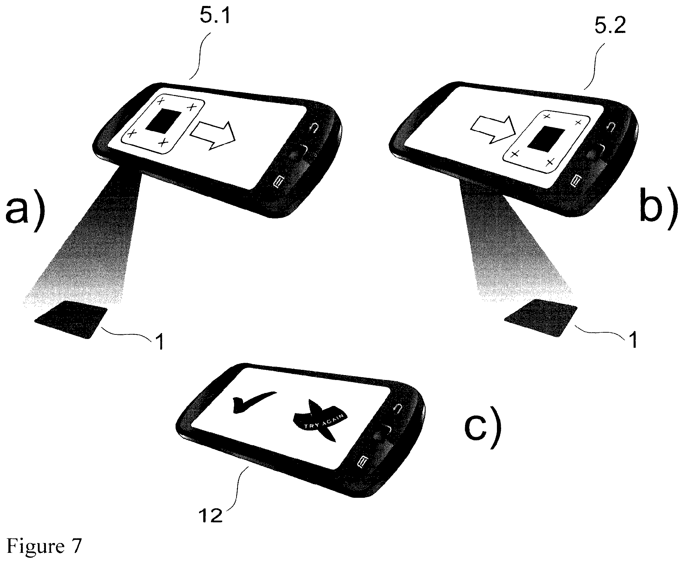

The easiest way to take pictures of the DOVID at different observation conditions is to move the smartphone above it, parallel to its plane. When the first picture of the DOVID (1) is being taken its image should be located inside the frame showed at one edge of the screen. And for the last picture, the frame is moved to another edge, (Figure 7). The smartphone should be positioned above DOVID at a distance that allows the camera to focus and the size of DOVID (1) is about 1/10 of the screen size, to be able to move the image of the DOVID (1) from one edge of the screen to another while taking the pictures.

During the execution of the algorithm, the smartphone uses the built-in flash in torch mode, automatically determines the exposure, focuses, and constantly takes pictures as often as possible.

To obtain another picture at substantially different observation conditions, the interface "guides" the operator by reference frame in which the DOVID's image should be positioned.

After capturing the first picture (5.1), (Figure 7a) and recognize it as valid another capturing is taken 5.2 (Figure 7b), the reference frame is moved to another edge of the screen, and the operator required to put the DOVID inside it. Only in cases of successful passing through all checks: finding a dynamic effect with valid parameters, recognizing the form of the hidden information, verifying the chromaticity histograms (7.1, 7.2), it is concluded that DOVID (1) is the original one and confirms the originality of the document or product possessing it (Figure 7c).

**Particular example of realization of the method**

An example of a machine-readable DOVID (1) is shown in Figure 1. The DOVID has two regions 3.1 and 3.2 which contain binary diffraction diffusers reproducing non-spectral colors that have difference in chromaticity. The binary random-texture image (3) comprises a computer-generated binary Fourier hologram of 64x64 pixels, in which a hidden image "OK" with a random phase mask is recorded. On the hologram (3) at four vertices of the square with side 2 mm centered with it, additional marks (4), consisting of alternating color concentric square contours with widths 50-50-50-100-50-50-50$\mu$m are placed. Four dynamic crosses (2.1, 2.2) with different ranges of angles of rotation are located at four vertices of a square with a side of 10 mm, centered on the hologram (3).

For verification, the operator launches an application that implements an algorithm on a smartphone with a camera with a resolution of at least 12MP and a minimum focal length typically about 10 cm and places the smartphone horizontally above the DOVID (1), parallel to its plane at a distance of about 11 cm. The flash switches to torch mode. A frame appears on the screen on the left edge of the screen, where the DOVID image must be positioned. The camera automatically focuses and determines the optimal exposure. The first view 5.1 is captured and stored in a 24-bit RGB format for further processing.

Local filtering and binarization of the image are performed. Using the Fourier transform, the H1 transformation is determined and the image is roughly straightened. By the correlation method, the additional marks (4) are found and the H2 transformation is determined and the straightened image (6) is obtained.

The straightened image (6) is correlatively compared with the original one, and if the correlation level is greater than the threshold value of 0.8, it is concluded that the binary image is original. The straightened image (6) is processed by Fourier transform. The amplitude part is taken and displayed on the screen. The user can see the decoded image (10).

There are four crosses at the vertices of the square centered to the hologram which angles of rotation A1.1, A1.2, A1.3, A1.4 are defined

The image is converted to HSV format. The brightness (V-component) is binarized and used as a mask for the chromaticity (Hue component). A histogram (7.1) of chromaticity is plotted. The maxima Hue1.1, Hue1.2 are defined, which correspond to the two non-spectral colors used for the first picture. If Hue1.1 is within the range from 30 to 40 degrees and Hue1.2 is within the range from 105 to 115 degrees, then the difference dH1 = Hue1.2 - Hue1.1 is calculated and it is concluded that the first picture is valid and the second one at substantially different observation conditions can be taken.

The reference frame is shifted to the right edge of the screen and the second picture (5.2) is taken. The processing of the second picture is similar to the first one. As a result, the angles of orientation A2.1, A2.2, A2.3, A2.4 and the maxima of the histogram (7.2) of the chromaticity Hue2.1, Hue2.2 are obtained. If Hue2.1 is within the range from 30 to 40 degrees and Hue2.2 is within the range from 125 to 135 degrees, then the difference dH2 = Hue2.2 - Hue2.1 is calculated. If the modulus of difference | dH2-dH1 | is within the range of 15 to 25 degrees, it is concluded that the non-spectral color features at the areas (3.1, 3.2) are original.

Average values of the angles of positioning of crosses are calculated:

$$B1 = (A1.1+A1.3)/2 \qquad B2 = (A1.2++A1.4)/2 \qquad B3 = (A2.1+A2.3)/2 \qquad B4 = (A2.2+A2.4)/2$$

When capturing the pictures with azimuth angles under $\pm$ 30, the expected meanings of the angles are B1=-23°, B2 = - 34°, B3 = +23°, B4=+34°

If the measured angles differences are in the range of $\pm 10°$ of the expected values, it is concluded that the dynamic effect is original.

Upon successful passing through all checks: finding a dynamic effect with valid parameters, recognizing the form of the binary random-texture image, decoding of the hidden information, and verifying the chromaticity histograms, it is concluded that DOVID is the original and the smartphone screen shows the green sign "V". Otherwise, a red "X" is displayed (Figure 7c).

**Claims**

1. A method for verifying a diffractive optical variable identification device (1), comprising machine readable features, comprising capturing the device (1) at two substantially different viewing angles, wherein the diffractive optical variable identification device (1) is formed in that

   a) The diffractive optical variable identification device (1) is implemented comprising binary random-texture image (3) containing hidden information (10, 11);
   b) On the binary random-texture image (3) at four vertices of the square centered on device (1), additional marks (4) shall be placed, consisting of alternating color concentric square contours with ratios 1:1:1:2:1:1:1;
   c) At least two regions (3.1, 3.2) are formed on the device (1), comprising binary diffraction diffusers reproducing different non-spectral colors;
   d) Four rotating dynamic crosses (A2.1, A2.2, A2.3, A2.4) with different ranges of angles of rotation are placed outside the random-texture image at vertices of the square centered with respect to the device (1);

   and the following are performed for verifying the diffractive optical variable identification device operations:

   e) The diffractive optical variable identification device (1) thus formed is subjected to verification procedure by launching an algorithm application on a smartphone with a camera having a minimum focal length of 10 cm, with the smartphone positioned horizontally above the device (1) parallel to its plane;
   f) The app switches the flash of the smartphone into torch mode and uses its light to take pictures;
   g) The user manually positions the smartphone so that the DOVID image positions into a frame that appears on the left side of the smartphone screen;
   h) The camera makes autofocus and autoexposure and captures the first picture (5.1), which is stored in a 24-bit RGB format for further processing;

i) The geometric deformations are corrected using the additional marks to obtain the straightened image (6);

j) The straightened image (6) is correlatively compared with the original one, and if correlation level is greater than the threshold value of 0.8 (the correlation function is normalized to 1 for full coincidence case), it is concluded that the binary image (3) with a random texture is original;

k) The picture (5.1) is converted to HSV format and its histogram (7.1) of the chromaticity is plotted from which the maxima H1.1, H1.2 are found and are compared with predefined values and if the differences do not exceed a preselected threshold value, it is concluded that the first picture (5.1) is valid and a second one at substantially different observation angles can be taken;

l) The frame on the screen of the smartphone is moved to the right side of the screen and the second picture (5.2) is taken, the processing of which is the same as for the first picture;

m) The dynamic effect is identified from the two pictures and parameters of the dynamic effect (A2.1, A2.2, A2.3, A2.4) are calculated, and when the values are within preset values ranges, it follows that the dynamic effect is original; and if all checks are passed successfully: the binary image with random texture and dynamic effect are original and the hidden information (10, 11) is successfully decrypted, it follows that the diffractive optical variable identification device (1) is original and the corresponding message is displayed on the smartphone's screen.

2. A method according to claim 1, wherein the binary image with a random texture (3) is a Fourier hologram and it contains a hidden image with a random phase mask and the straightened image (6) is processed by a backward Fourier transform, the amplitude portion of which contains a decoded image (10), which is displayed on the smartphone's screen.

3. Method according to claim 1, wherein the binary random texture image (3) is encrypted with a digital key image and the straightened image (6) is decrypted and the original image (11) is displayed on the smartphone's screen.

**Patentansprüche**

1. Verfahren zum Verifizieren einer diffraktiven, optisch variablen Identifikationsvorrichtung (1), umfassend maschinenlesbare Merkmale, umfassend das Erfassen der Vorrichtung (1) aus zwei im Wesentlichen unterschiedlichen Betrachtungswinkeln, wobei die diffraktive, optisch variable Identifikationsvorrichtung (1) so gebildet wird, dass

a) die diffraktive, optisch variable Identifikationsvorrichtung (1) so implementiert wird, dass sie ein binäres Zufallstexturbild (3) umfasst, das verborgene Informationen (10, 11) enthält;

b) auf dem binären Zufallstexturbild (3) an vier Ecken des auf der Vorrichtung (1) zentrierten Quadrats zusätzliche Markierungen (4) platziert werden sollen, die aus farbwechselnden, konzentrischen quadratischen Konturen mit den Verhältnissen 1:1:1:2:1:1:1 bestehen;

c) zumindest zwei Regionen (3.1, 3.2) an der Vorrichtung (1) gebildet werden, die binäre Diffraktionsdiffusoren umfassen, die verschiedene, nicht spektrale Farben reproduzieren;

d) vier rotierende dynamische Kreuze (A2.1, A2.2, A2.3, A2.4) mit unterschiedlichen Drehwinkelbereichen außerhalb des Zufallstexturbildes an Ecken des in Bezug auf die Vorrichtung (1) zentrierten Quadrats platziert werden,

und die folgenden Operationen durchgeführt werden, um die diffraktive, optisch variable Identifikationsvorrichtung zu verifizieren:

e) Die so gebildete diffraktive, optisch variable Identifikationsvorrichtung (1) wird einer Verifizierungsprozedur unterzogen, indem eine Algorithmus-Applikation auf einem Smartphone mit einer Kamera gestartet wird, die eine minimale Brennweite von 10 cm aufweist, wobei das Smartphone horizontal über der Vorrichtung (1) parallel zu deren Ebene positioniert wird;

f) die Applikation schaltet den Blitz des Smartphones in den Taschenlampenmodus und verwendet dessen Licht, um Bilder aufzunehmen;

g) der Benutzer positioniert das Smartphone manuell auf solche Weise, dass das Bild der DOVID in einem Rahmen positioniert ist, der auf der linken Seite des Smartphone-Bildschirms erscheint;

h) die Kamera stellt Autofokus und Autobelichtung ein und erfasst das erste Bild (5.1), das in einem 24-Bit-RGB-Format zur weiteren Verarbeitung gespeichert wird;

i) die geometrischen Verzerrungen werden unter Verwendung der zusätzlichen Markierungen korrigiert, um das begradigte Bild (6) zu erhalten;

j) das begradigte Bild (6) wird korrelativ mit dem Originalbild verglichen, und wenn das Korrelationsniveau höher als der Schwellenwert von 0.8 ist (die Korrelationsfunktion wird für den Fall der vollständigen Koinzidenz auf 1 normalisiert), wird gefolgert, dass das Binärbild (3) mit einer Zufallstextur original ist;

k) das Bild (5.1) wird in das HSV-Format konvertiert und sein Histogramm (7.1) der Chromatizität wird abgebildet, woraus die Maxima H1.1, H1.2 gefunden und mit vordefinierten Werten verglichen werden, und wenn die Unterschiede einen vorgewählten Schwellenwert nicht überschreiten, wird gefolgert, dass das erste Bild (5.1) gültig ist und ein zweites aus im Wesentlichen unterschiedlichen Betrachtungswinkeln aufgenommen werden kann;

l) der Rahmen auf dem Bildschirm des Smartphones wird auf die rechte Seite des Bildschirms bewegt und das zweite Bild (5.2) wird aufgenommen, wobei dessen Verarbeitung gleich wie jene für das erste Bild ist;

m) der dynamische Effekt aus den zwei Bildern wird identifiziert, und Parameter des dynamischen Effekts (A2.1, A2.2, A2.3, A2.4) werden berechnet, und wenn die Werte innerhalb vorher festgelegter Wertebereiche liegen, folgt daraus, dass der dynamische Effekt original ist; und wenn alle Überprüfungen erfolgreich durchlaufen werden: das Binärbild mit Zufallstextur und der dynamische Effekt original sind und die verborgenen Informationen (10, 11) erfolgreich entschlüsselt werden, folgt daraus, dass die diffraktive, optisch variable Identifikationsvorrichtung (1) original ist, und die entsprechende Meldung wird auf dem Bildschirm des Smartphones angezeigt.

2. Verfahren nach Anspruch 1, wobei das Binärbild mit einer Zufallstextur (3) ein Fourier-Hologramm ist und es ein verborgendes Bild mit einer Zufalls-Phasenmaske enthält, und das begradigte Bild (6) mittels einer inversen Fourier-Transformation verarbeitet wird, deren Amplitudenanteil ein dekodiertes Bild (10) enthält, das auf dem Bildschirm des Smartphones angezeigt wird.

3. Verfahren nach Anspruch 1, wobei das binäre-Zufallstextur-Bild (3) mit einem digitalen Schlüsselbild verschlüsselt wird und das begradigte Bild (6) entschlüsselt wird und das originale Bild (11) auf dem Bildschirm des Smartphones angezeigt wird.

**Revendications**

1. Procédé de vérification d'un dispositif d'identification diffractif à variation optique (1) comprenant des caractéristiques lisibles par machine, comprenant la détection du dispositif (1) sous deux angles de vue sensiblement différents, le dispositif d'identification diffractif à variation optique (1) étant formé de telle sorte que

   a) le dispositif d'identification diffractif à variation optique (1) est mis en œuvre de manière à comprendre une image à texture aléatoire binaire (3) contenant des informations cachées (10, 11) ;

   b) des marques supplémentaires (4) doivent être placées sur l'image à texture aléatoire binaire (3) au niveau des quatre sommets du carré centré sur le dispositif (1), lesquelles marques étant constituées de contours carrés concentriques avec des proportions de 1:1:1:2:1:1:1 et changeant de couleur ;

   c) au moins deux régions (3.1, 3.2) sont formées sur le dispositif (1), comprenant des diffuseurs de diffraction binaires reproduisant différentes couleurs non spectrales ;

   d) quatre croix dynamiques rotatives (A2.1, A2.2, A2.3, A2.4) avec différentes plages d'angles de rotation sont placées à l'extérieur de l'image à texture aléatoire au niveau des sommets du carré centré par rapport au dispositif (1),

   et les opérations suivantes sont effectuées pour vérifier le dispositif d'identification diffractif à variabilité optique :

   e) le dispositif d'identification diffractif à variabilité optique (1) ainsi formé est soumis à une procédure de vérification en lançant une application algorithmique sur un smartphone équipé d'un appareil photo ayant une distance focale minimale de 10 cm, le smartphone étant positionné horizontalement au-dessus du dispositif (1) parallèlement à son plan ;

   f) l'application commute le flash du smartphone en mode lampe de poche et utilise sa lumière pour prendre des photos ;

   g) l'utilisateur positionne manuellement le smartphone de manière à ce que l'image du DOVID soit positionnée dans un cadre qui apparaît sur le côté gauche de l'écran du smartphone ;

   h) l'appareil photo règle l'autofocus et l'exposition automatique et prend la première image (5.1), qui est enregistrée au format RVB 24 bits pour un traitement ultérieur ;

   i) les distorsions géométriques sont corrigées à l'aide des marques supplémentaires afin d'obtenir l'image redressée (6) ;

   j) l'image redressée (6) est comparée de manière corrélative à l'image originale, et si le niveau de corrélation est supérieur à la valeur seuil de 0,8 (la fonction de corrélation est normalisée à 1 en cas de coïncidence complète), **il** est conclu que l'image binaire (3) avec une texture aléatoire est originale ;

k) l'image (5.1) est convertie au format HSV et son histogramme (7.1) de chromaticité est représenté, à partir duquel les maxima H1.1, H1.2 sont trouvés et comparés à des valeurs prédéfinies, et si les différences ne dépassent pas une valeur seuil présélectionnée, il est conclu que la première image (5.1) est valide et qu'une deuxième image peut être prise sous des angles de vue sensiblement différents ;

l) le cadre sur l'écran du smartphone est déplacé vers le côté droit de l'écran et la deuxième image (5.2) est prise, son traitement étant identique à celui de la première image ;

m) l'effet dynamique est identifié à partir des deux images et les paramètres de l'effet dynamique (A2.1, A2.2, A2.3, A2.4) sont calculés, et si les valeurs se situent dans des plages de valeurs prédéfinies, il en résulte que l'effet dynamique est original ; et si toutes les vérifications sont réussies : l'image binaire avec texture aléatoire et l'effet dynamique sont originaux et les informations cachées (10, 11) sont décryptées avec succès, **il** en résulte que le dispositif d'identification diffractif à variabilité optique (1) est original et le message correspondant s'affiche sur l'écran du smartphone.

2. Procédé selon la revendication 1, dans lequel l'image binaire avec une texture aléatoire (3) est un hologramme de Fourier et contient une image cachée avec un masque de phase aléatoire, et l'image redressée (6) est traitée au moyen d'une transformation de Fourier inverse, dont la composante d'amplitude contient une image décodée (10) qui s'affiche sur l'écran du smartphone.

3. Procédé selon la revendication 1, dans lequel l'image binaire à texture aléatoire (3) est cryptée à l'aide d'une image clé numérique et l'image redressée (6) est décryptée et l'image originale (11) est affichée sur l'écran du smartphone.

Figure 1

Figure 2

Figure 3

Figure 4

9.1

8.1

$H_{1.1}$   $H_{1.2}$   HUE

7.1

9.2

8.2

$H_{2.1}$   $H_{2.2}$   HUE

7.2

Figure 5

Figure 6

Figure 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014055824 A1

- US 2010314861 A1